# DEMANDE DE BREVET EUROPEEN

(11) **EP 1 533 155 A2**
(43) Date de publication de la demande: **25.05.2005**
(21) Numéro de dépôt: 04027158.7
(22) Date de dépôt: 16.11.2004
(51) Int. Cl.: B60H 1/00

(54) **Dispositif de réception de moyens de fixation**

(30) Priorité: 18.11.2003 DE 10353702
(71) Demandeur: Valeo Klimasysteme GmbH, 96476 Rodach (DE)
(72) Inventeur: Fuhrmann, Lutz, 96479 Weitramsdorf (DE)
(74) Mandataire: Lemaire, Marc

(57) **Abrégé**

Dispositif de réception de moyens de fixation (1) prévu en particulier au niveau d'une installation de chauffage, de ventilation et/ou de climatisation, comportant un élément de compensation des tolérances (10), qui est muni d'une forure de réception du moyen de fixation (5) et qui permet un déplacement au moins dans une direction sensiblement perpendiculaire à la forure de réception du moyen de fixation (5).

## Description

La présente invention concerne en général un dispositif de réception de moyens de fixation, prévu au niveau d'une installation de ventilation, de chauffage ou de climatisation d'un véhicule automobile.

Au cours de la conception d'une telle installation, un homme du métier, compétent dans le domaine de la technique de ventilation, de chauffage et/ou de climatisation, doit tenir compte des tolérances relativement élevées et les prévoir, en particulier pour la fixation et l'assemblage des éléments du carter, étant donné que des tolérances trop faibles entraînent la formation d'une zone de fuite indésirable et cela peut engendrer un plus grand développement de bruits.

Il faut également qu'un homme du métier en tienne compte lorsqu'il conçoit et développe le positionnement des différents modules, en particulier pour le positionnement d'un échangeur de chaleur, étant donné qu'il faut ici une fixation sensiblement exempte de tension.

De manière classique, le montage des modules concernés est effectué avec les dispositifs de fixation habituels, tels que des vis. En présence de différences de tolérances, les travaux de montage peuvent souvent être très complexes et très longs. Si, par exemple, la fixation d'un élément de construction est prévue à plus de deux emplacements, les dispositifs de fixation doivent satisfaire à des exigences très rigoureuses d'exactitude, de position et de précision.

Avec les moyens de fixation actuels, il se pose en particulier le problème que les différences de tolérance et de fabrication entraînent des gauchissements et l'application permanente de forces sur les zones de fixation.

Le but de la présente invention est donc de proposer un dispositif de réception de moyens de fixation, en particulier pour la fixation d'un module de climatisation, qui évite ou réduit les inconvénients ci-dessus mentionnés et de proposer en particulier une fixation si possible simple, rapide et à coûts avantageux, qui permet en plus un assemblage sensiblement exempt de tension des éléments et des modules.

Cet objectif est résolu selon l'invention par les caractéristiques de la revendication 1 indépendante, des modes de réalisation judicieux étant décrits à l'appui des caractéristiques des sous-revendications.

La présente invention propose en particulier un dispositif de réception de moyens de fixation, prévu au niveau d'une installation de chauffage, de ventilation et/ou de climatisation, comportant d'un élément de compensation des tolérances, qui est muni d'une forure de réception du moyen de fixation et qui permet un déplacement au moins dans une direction sensiblement perpendiculaire à la forure de réception du moyen de fixation.

L'élément de compensation des tolérances comporte une forure de réception du moyen de fixation. La forure est par exemple un carottage pour une vis autotaraudeuse ou un insert métallique pour une vis métrique.

L'élément de compensation des tolérances est dans ce cas conçu de telle sorte que l'on peut effectuer d'abord un assemblage fixe des éléments et ensuite effectuer encore une compensation des tolérances au niveau d'une zone de fixation. Si, par exemple, un appareil de chauffage, de climatisation et de ventilation est fixé au niveau de plusieurs emplacements dans l'habitacle d'un véhicule, il faut compenser des tolérances qui sont générées au cours de la fabrication ou de la production. Si au cours de la fixation et du montage des modules, il se produit des gauchissements, dans ce cas des forces élevées s'exercent sur les différentes pièces de manière à provoquer des fuites et des endommagements. Grâce à l'élément de compensation des tolérances, on peut effectuer de manière avantageuse un déplacement dans au moins une direction sensiblement perpendiculaire à la forure de réception du moyen de fixation, de telle sorte que des gauchissements et des applications de force sont évités entre les éléments de la fixation.

Ainsi, de manière étonnamment simple, il est possible au cours de la fixation de compenser grâce à l'élément de compensation des tolérances un certain jeu entre les composants et éléments à assembler par vissage.

De manière avantageuse, un déplacement exactement dans une direction sensiblement perpendiculaire à la forure de réception du moyen de fixation est possible. Si on fixe par exemple un appareil de chauffage, de climatisation et de ventilation contre un support tubulaire et une traverse verticale, il est alors avantageux de fixer d'abord une zone de fixation de l'appareil et, ensuite, au moyen de l'élément de compensation des tolérances, de déplacer ledit appareil exactement dans une direction.

Dans un mode de réalisation particulièrement préféré, l'élément de compensation des tolérances est un coulisseau. Le coulisseau est formé par un corps parallélépipédique ou en forme de dé, muni d'une bride, qui comporte au moins une forure de réception du moyen de fixation, dans laquelle s'engage un boulon fileté ou une vis autotaraudeuse traversant la pièce à fixer. Le corps du coulisseau peut être muni en outre d'au moins un étrier ressort de manière à réaliser une précontrainte pour bloquer le coulisseau. Un élément de compensation des tolérances selon l'invention peut donc être réalisé de manière simple et à coûts avantageux.

En outre, il est avantageux que le coulisseau soit prévu dans un boîtier de coulisseau. Le coulisseau s'emboîte par conjugaison de forme dans le boîtier de coulisseau. Il en résulte en particulier un premier blocage du coulisseau dans le boîtier de coulisseau. Le boîtier du coulisseau comporte au moins une rainure en T ou similaire pour le coulisseau. Le coulisseau peut être déplacé au moins dans une direction dans la rainure à l'intérieur du boîtier du coulisseau, en particulier sensiblement perpendiculairement à la forure de réception du moyen de fixation.

Le boîtier du coulisseau comporte des saillies ou éléments similaires, pour maintenir le coulisseau et le positionner de manière mobile par glissement. Le coulisseau est guidé de manière simple par les saillies. Il est possible d'utiliser un boîtier de coulisseau séparé, destiné à être fixé, ou il est aussi possible de l'intégrer dans un élément déjà présent.

Le boîtier de coulisseau pourrait comporter des dispositifs d'encliquetage de manière à pouvoir déplacer le coulisseau pas à pas ou progressivement. En outre, le boîtier de coulisseau peut constituer une sécurité contre la perte du coulisseau pendant ou avant le montage.

Par ailleurs, il est avantageux que l'élément de compensation des tolérances soit réalisé dans un matériau thermoplastique, en particulier en polyoxyméthylène (POM). De telles matières plastiques présentent, d'une part, une dureté élevée avec une bonne stabilité de forme et, d'autre part, une haute résistance aux chocs. Les matières thermoplastiques sont très résistantes aux agents chimiques. En outre, un élément de compensation des tolérances en matière thermoplastique peut être réalisé de manière simple et à coûts avantageux.

De manière préférée, le boîtier de coulisseau est réalisé dans une matière thermoplastique, en particulier l'acrylonitrile butadiène styrène (ABS). De telles matières plastiques présentent également une haute résistance aux chocs aux températures élevées, sont stables à la température, résistants face aux agents chimiques et possèdent une rigidité et dureté élevées. En outre, ces matières plastiques agissent dans le sens d'un amortissement des bruits.

Le boîtier de coulisseau peut aussi être intégré dans le carter de chauffage ou de climatisation. De manière avantageuse, il n'est donc pas nécessaire de prévoir un carter supplémentaire et, par conséquent, il est possible de réduire les coûts.

Par ailleurs, il est avantageux que la forure de réception du moyen de fixation soit formée par un carottage pour une vis autotaraudeuse. De ce fait, le blocage et la fixation peuvent être réalisés de manière simple.

De manière avantageuse, la forure de réception du moyen de fixation est formée par un insert métallique destiné à recevoir une vis filetée. Il est ainsi possible de réaliser de manière simple et à faibles coûts un assemblage amovible, qui est en particulier plus stable, plus résistant à l'usure et plus précis en forme.

En outre, il est avantageux que l'élément de compensation des tolérances soit formé par deux douilles filetées qui peuvent être amenées en prise.

Par ailleurs, il est aussi possible de prévoir un dispositif de précontrainte, en particulier pour une précontrainte dans une direction perpendiculaire au sens de déplacement. Il est donc possible, par exemple, de pré-positionner l'élément de compensation des tolérances.

Enfin, de manière préférée, il est prévu des moyens qui empêchent un mouvement de l'élément de compensation des tolérances dans des positions prédéfinies, plus particulièrement au moyen d'un emboîtement. Par un tel mode de réalisation, comportant par exemple des cannelures complémentaires, il est possible après le serrage du moyen de fixation d'empêcher un déplacement involontaire de l'élément de compensation des tolérances.

D'autres caractéristiques et avantages de l'invention sont davantage mis en évidence à la lecture de la description ci-après, uniquement à titre d'exemple et non limitative, d'un mode de réalisation préféré qui est expliqué par référence aux dessins annexés, parmi lesquels :
la figure 1 est une vue en perspective d'un mode de réalisation préféré d'un dispositif de réception de moyens de fixation selon l'invention ;
la figure 2 est une vue en élévation du dispositif de réception de moyens de fixation selon la figure 1 avec un boîtier de coulisseau ;
la figure 3 est une vue en perspective du dispositif des figures 1 et 2, au niveau d'une installation de climatisation avant le montage ;
la figure 4 est une vue correspondant à la figure 3 du dispositif au niveau d'une installation de climatisation, à la fin du montage avec un support tubulaire et une traverse verticale ;
la figure 5 est une vue en perspective d'un autre mode de réalisation d'un dispositif de réception de moyens de fixation selon l'invention avec un boîtier de coulisseau sans coulisseau ;
la figure 6 est une vue en perspective du dispositif selon la figure 5 avec un boîtier de coulisseau contenant un coulisseau ;
la figure 7 est une vue correspondant à la figure 1 d'un autre mode de réalisation d'un dispositif de réception de moyens de fixation selon l'invention.

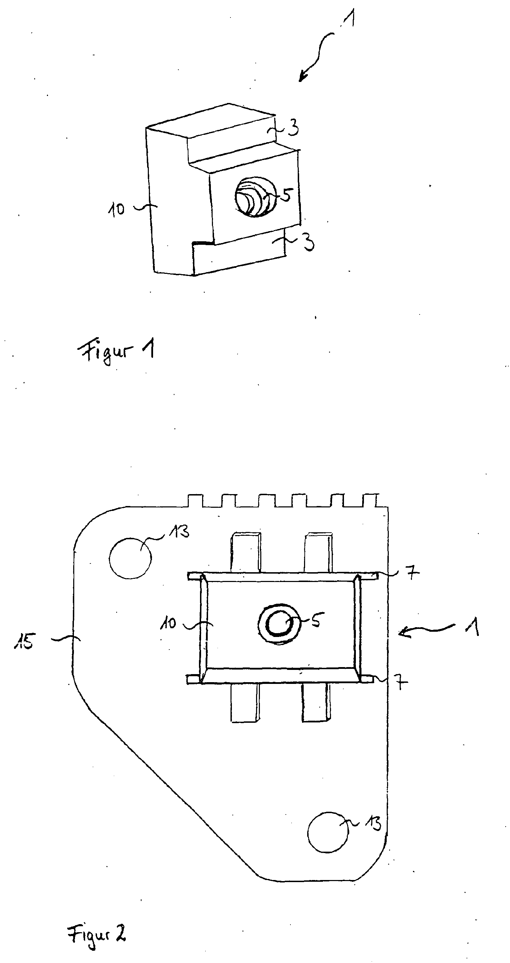

La figure 1 représente sur une vue en perspective un mode de réalisation préféré d'un dispositif de réception de moyens de fixation 1 selon l'invention.

Un élément de compensation des tolérances 10 comporte une bride 3 et une forure de réception du moyen de fixation 5. La forure 5 est un carottage pour une vis autotaraudeuse ou un insert métallique pour une vis métrique. L'élément de compensation des tolérances 10 est réalisé en matière thermoplastique.

L'élément de compensation des tolérances 10 est un coulisseau que l'on peut déplacer en vue de compenser des tolérances. Il est donc possible de compenser les tolérances dans au moins une direction.

La figure 2 représente une vue en perspective du dispositif de réception de moyens de fixation 1 selon la figure 1.

L'élément de compensation des tolérances 10 est à nouveau un coulisseau qui est agencé dans un boîtier de coulisseau ou constitue une partie de l'installation de climatisation 20. Le coulisseau peut se déplacer à l'intérieur du boîtier 15 dans une rainure 7. Le boîtier du coulisseau 15 est fixé sur un composant d'une installation de climatisation. À cet effet, il est prévu deux forures 13 correspondantes sur le boîtier du coulisseau 15.

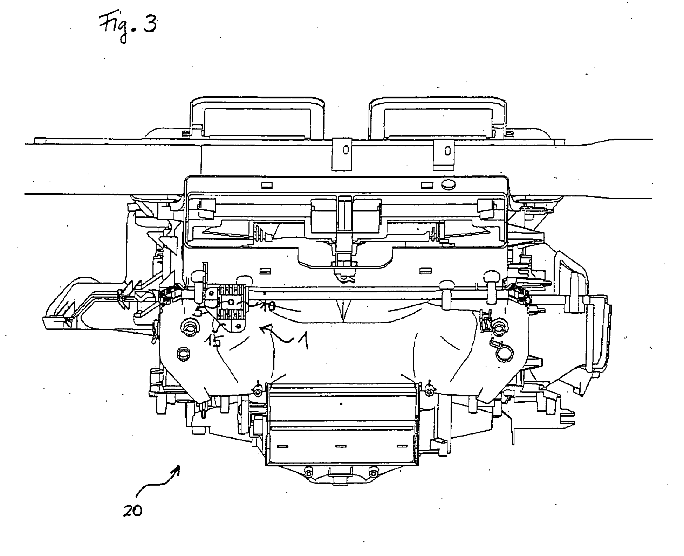

La figure 3 représente une vue en élévation en perspective du dispositif de réception de moyens de fixation 1 selon les figures 1 et 2 au niveau d'une installation de climatisation avant le montage.

L'élément de compensation des tolérances 10 est logé dans le boîtier du coulisseau 15. Le dispositif de réception de moyens de fixation 1 est agencé sur une installation de climatisation 20. L'élément de compensation des tolérances 10 peut se déplacer sensiblement perpendiculairement à la forure de réception du moyen de fixation 5.

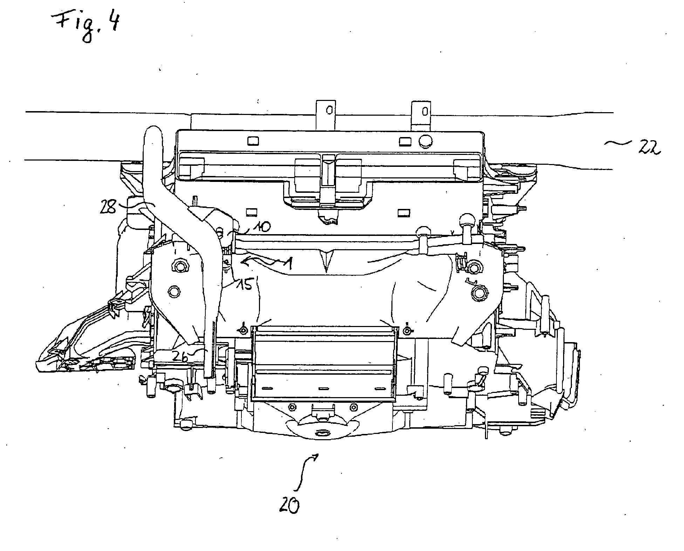

La figure 4 représente, sur une vue correspondant à la figure 3, le dispositif de réception de moyens de fixation 1 selon l'invention au niveau d'une installation de climatisation après le montage.

Au cours du montage, le support tubulaire 22 et la traverse verticale 26 sont d'abord vissés avec l'installation de climatisation 20 ou le carter de la conduite de ventilation. Ensuite, l'installation de climatisation 20, plus précisément le support tubulaire 22 est vissé contre le tableau de bord non représenté sur les figures. Puis, la traverse verticale 26 est vissée contre un canal de circulation d'air 28. Afin qu'aucun gauchissement ne se produise sur cette unité, il est prévu un élément de compensation des tolérances 10 au niveau de la zone de fixation entre la traverse verticale et l'installation de climatisation. L'élément de compensation des tolérances 10 peut se déplacer dans la rainure 7 du boîtier du coulisseau 15, de telle sorte que le monteur peut réaliser un assemblage sensiblement sans tension.

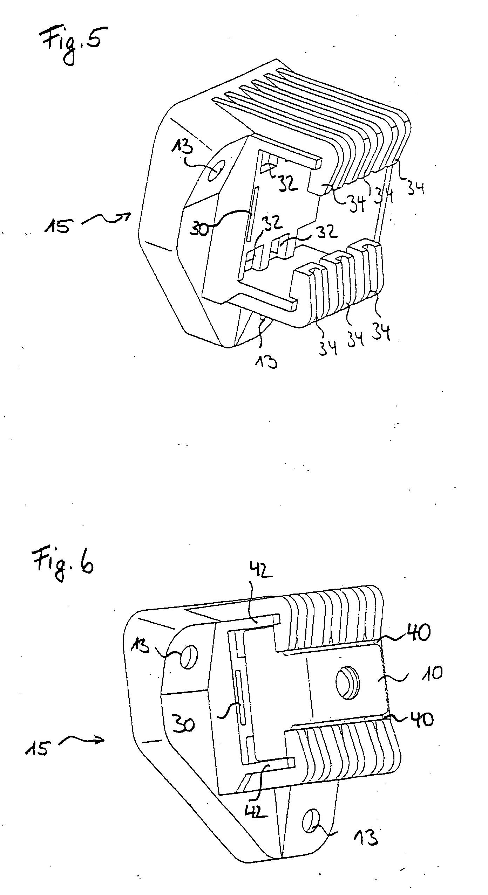

La figure 5 représente une vue en perspective d'un autre mode de réalisation d'un dispositif de réception de moyens de fixation 1 selon l'invention, avec un boîtier de coulisseau 15 sans coulisseau. Le boîtier du coulisseau 15 définit une cavité ouverte sur un côté et dont la face supérieure comporte une fente.

Le boîtier de coulisseau 15 est muni d'une sécurité de transport 30, c'est-à-dire une sécurité empêchant la perte de l'élément de compensation des tolérances 10. Ainsi, un coulisseau peut être introduit par l'extrémité ouverte de la cavité et être bloqué au moyen de la sécurité de transport. Le boîtier de coulisseau 15 comporte des rainures en T 32, pour former un engagement par emboîtement. Les rainures en T 32 sont destinées à assurer le déplacement pas à pas et progressif du coulisseau. Le boîtier de coulisseau 15 est fixé contre l'installation de climatisation 20 au moyen des forures 13.

Le boîtier de coulisseau 15 comporte des saillies 34 permettant, d'une part, de bloquer le coulisseau et, d'autre part, de recevoir le coulisseau de manière mobile par glissement.

Le boîtier de coulisseau 15 peut être intégré dans un carter de ventilation ou de climatisation.

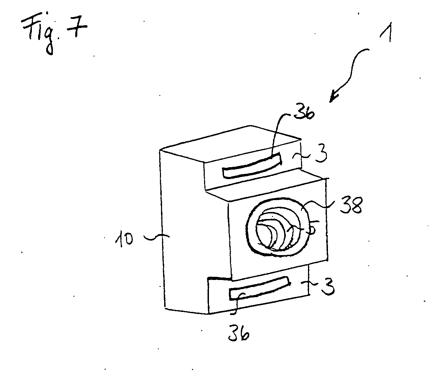

La figure 6 représente une vue en perspective du dispositif 1 selon la figure 5 avec un boîtier de coulisseau 15 et un coulisseau.

Le coulisseau est engagé dans le boîtier de coulisseau 15. Le coulisseau comporte des cannelures ou rainures sur la face supérieure de la bride. Des cannelures correspondantes sont prévues sur les saillies. Les cannelures permettent un déplacement pas à pas et progressif du coulisseau et une préfixation aux dimensions nominales.

Le boîtier de coulisseau 15 et le coulisseau forment des fentes 40 et 42. Les fentes 40 et 42 permettent une compensation des tolérances. De ce fait, un positionnement fixe est assuré dans la direction de vissage.

La figure 7 est une vue correspondant à la figure 1 d'un autre mode de réalisation d'un dispositif de réception de moyens de fixation 1 selon l'invention.

Le coulisseau est muni sur chacune des faces supérieures de la bride 3 d'un étrier ressort 36. L'étrier ressort 36 est réalisé de part en part et met le coulisseau en précontrainte dans le boîtier de coulisseau 15 ; il est évident que d'autres précontraintes sont possibles, par exemple dans la direction de la forure de réception.

Dans la forure de réception du moyen de fixation 5 est mis en place un insert métallique 38, qui est destiné à renforcer la structure. L'insert métallique 38 est une douille en métal ou dans un matériau similaire résistant et, en tant que forure de réception du moyen de fixation, peut être muni d'un taraudage prédéfini.

En conclusion, il convient de remarquer que le concept selon l'invention se fonde sur l'idée de réaliser un dispositif de réception de moyens de fixation qui permet une fixation sans contrainte de pièces et de modules, de compenser des tolérances et qui, de manière surprenante, est simple, rapide et peu cher à fabriquer.

Bien que la présente invention ait été entièrement décrite en priorité par référence à un mode de réalisation préféré, l'homme du métier devrait constater que différentes possibilités de modification dans le cadre des revendications annexées sont possibles sans s'écarter du concept selon l'invention et de la protection revendiquée.

L'homme du métier constatera plus particulièrement que les conceptions les plus variées sont possibles pour des éléments de compensation des tolérances. L'élément de compensation des tolérances peut être réalisé dans les matériaux les plus divers et avec différentes géométries. En outre, un dispositif de réception de moyens de fixation est possible en plusieurs emplacements, en particulier lorsqu'un élément doit être fixé au niveau de plusieurs emplacements et que des tolérances doivent être compensées dans différentes directions.

## Revendications

1. Dispositif de réception de moyens de fixation (1) prévu en particulier au niveau d'une installation de chauffage, de ventilation et/ou de climatisation, comportant un élément de compensation des tolérances (10), qui est muni d'une forure de réception du moyen de fixation (5) et qui permet un déplacement au moins dans une direction sensiblement perpendiculaire à la forure de réception du moyen de fixation (5).

2. Dispositif de réception de moyens de fixation (1) selon la revendication 1, **caractérisé en ce qu'**un déplacement est possible exactement dans une direction sensiblement perpendiculaire à la forure de réception du moyen de fixation (5).

3. Dispositif de réception de moyens de fixation (1) selon la revendication 1 ou 2, **caractérisé en ce que** l'élément de compensation des tolérances (10) est un coulisseau.

4. Dispositif de réception de moyens de fixation (1) selon la revendication 3, **caractérisé en ce que** le coulisseau est prévu dans un boîtier de coulisseau (15), définissant en particulier une cavité qui, dans un plan perpendiculaire au sens de déplacement du coulisseau, présente une forme complémentaire à celle du coulisseau.

5. Dispositif de réception de moyens de fixation (1) selon l'une quelconque des revendications 1 à 4, **caractérisé en ce que** l'élément de compensation des tolérances (10) est réalisé en matière thermoplastique, en particulier en polyoxyméthylène (POM).

6. Dispositif de réception de moyens de fixation (1) selon l'une quelconque des revendications 1 à 5, **caractérisé en ce que** le boîtier de coulisseau (15) est réalisé dans une matière thermoplastique, en particulier l'acrylonitrile butadiène styrène (ABS).

7. Dispositif de réception de moyens de fixation (1) selon l'une quelconque des revendications 1 à 6, **caractérisé en ce que** la forure de réception du moyen de fixation (5) est un carottage pour une vis autotaraudeuse.

8. Dispositif de réception de moyens de fixation (1) selon l'une quelconque des revendications 1 à 6, **caractérisé en ce que** la forure de réception du moyen de fixation (5) est un insert métallique pour une vis filetée.

9. Dispositif de réception de moyens de fixation (1) selon l'une quelconque des revendications 1 à 8, **caractérisé en ce qu'**il est prévu un dispositif de précontrainte (36), en particulier pour une précontrainte dans une direction perpendiculaire au sens de déplacement.

10. Dispositif de réception de moyens de fixation (1) selon l'une quelconque des revendications 1 à 9, **caractérisé en ce qu'**il est prévu des moyens qui empêchent un mouvement de l'élément de compensation des tolérances (10) dans des positions prédéfinies, plus particulièrement au moyen d'un emboîtement.
